# FASCICULE DE BREVET EUROPEEN

(11) **EP 1 466 372 B1**
(45) Date de publication et mention de la délivrance du brevet: **07.05.2008**
(21) Numéro de dépôt: 02801181.5
(22) Date de dépôt: 27.12.2002
(51) Int. Cl.: H01M 4/02, H01M 4/58, H01M 4/62, H01M 2/14, H01M 8/02, H01M 8/10, H01M 8/12, C25B 9/04, C25B 15/08, C25B 11/12, C01B 31/04

(54) **POUDRE MICROCOMPOSITE BASE DE PLAQUETTES DE GRAPHITE ET D UN FLUOROPOLYM RE ET OBJETS FABRIQUÉS AVEC C ETTE POUDRE**
MIKROZUSAMMENSETZUNGSPULVER AUF DER BASIS VON FLACHEN GRAPHITPARTIKELN UND EINES FLUORPOLYMERS UND DARAUS HERGESTELLTE OBJEKTE
MICROCOMPOSITE POWDER BASED ON FLAT GRAPHITE PARTICLES AND A FLUOROPOLYMER AND OBJECTS MADE FROM SAME

(30) Priorité: 14.01.2002 FR 0200374
(43) Date de publication de la demande: 13.10.2004
(73) Titulaire: Arkema France, 92800 Puteaux (FR); COMMISSARIAT A L'ENERGIE ATOMIQUE, 75015 Paris (FR)
(72) Inventeur: BONNET, Anthony, F-27170 Beaumont le Roger (FR); SALAS, Jean-Felix, F-37250 Montbazon (FR)
(74) Mandataire: Poulin, Gérard
(86) Numéro de dépôt international: PCT/FR2002/004569
(87) Numéro de publication internationale: WO 2003/067686

(56) Documents cités:
- WO-A-02/34670
- DE-A- 3 538 732
- US-A- 4 339 322
- AURBACH D ET AL: "BEHAVIOR OF LITHIATED GRAPHITE ELECTRODES COMPRISING SILICA BASED BINDER" JOURNAL OF APPLIED ELECTROCHEMISTRY, CHAPMAN AND HALL. LONDON, GB, vol. 28, no. 10, 1 octobre 1998 (1998-10-01), pages 1051-1059, XP000786929 ISSN: 0021-891X
- ZAGHIB K ET AL: "Effect of graphite particle size on irreversible capacity loss" JOURNAL OF THE ELECTROCHEMICAL SOCIETY, ELECTROCHEMICAL SOCIETY. MANCHESTER, NEW HAMPSHIRE, US, vol. 147, no. 6, 2000, pages 2110-2115, XP002190328 ISSN: 0013-4651

## Description

### [Domaine de l'invention]

La présente invention concerne une poudre microcomposite à base de plaquettes de graphite et d'un fluoropolymère ainsi que les objets fabriqués avec cette poudre. Plus précisément la poudre microcomposite est constituée de particules de taille de l'ordre de 0,1 µm à 0,5 µm en fluoropolymère, qui est avantageusement du PVDF, fixées sur des plaquettes de graphite. Cette poudre peut être obtenue par coatomisation.

Elle est particulièrement utile pour la réalisation de plaques bipolaires utilisées dans les piles à combustible. Les piles à combustible (fuel cells) qui sont constituées de ces plaques bipolaires subissent des conditions sévères d'utilisation en terme de pression, de température et d'agression chimique et électrochimique. Ces plaques bipolaires doivent donc pouvoir résister à ces différentes conditions ainsi que pouvoir être manipulées facilement lors du montage de la pile à combustible. Il existe plusieurs types de fonctionnement de piles à combustibles qui génèrent des cahiers des charges différents en ce qui concerne les caractéristiques que doivent présenter les plaques bipolaires en terme de conductivité, de résistance mécanique et de perméabilité.

### [l'art antérieur et le problème technique]

Les matériaux composites électriquement conducteurs sont constitués de particules conductrices dispersées dans une matrice organique. Le seuil de conduction, ou seuil de percolation (transition isolant - conducteur), est atteint lorsque les particules conductrices forment un réseau de chemins conducteurs connectés sur tout le volume du matériau composite.

Les particules conductrices peuvent être métalliques, ce qui présente l'avantage d'une bonne conductivité électrique. Elles présentent toutefois l'inconvénient de posséder une densité élevée et d'être sensibles à l'environnement chimique de la pile. Les particules non métalliques sont particulièrement intéressantes pour leur faible densité et leur résistance chimique. Les charges conductrices non métalliques les plus utilisées sont les produits pulvérulents à base de carbone, tels que les poudres de noir de carbone ou de graphite et les fibres de carbone.

Suivant la morphologie des particules (rapport de forme, surface spécifique), le seuil de percolation est atteint pour des taux de charges de quelques % volumique pour des fibres, et de 20 à 30 % vol pour des sphères. Ces charges permettent typiquement d'obtenir des conductivités dans le volume du matériau de l'ordre de 10⁻⁵ à 10⁻¹ S/cm. On constate ainsi que la conductivité des composites est très inférieure à celles des charges utilisées (de l'ordre de 1000 S/cm dans le cas du graphite), bien que les taux de charge soient supérieurs au seuil de percolation. Cet effet s'explique par les importantes résistances de contact entre particules adjacentes. Ces résistances sont liées d'une part à la faible surface de contact entre deux particules (résistance de constriction), et d'autre part, à la formation d'un film isolant à la surface des charges lors de leur dispersion dans le liant organique (résistance tunnel).

La résistance de constriction est définie par la relation *R_{cr}* = *rᵢ* / *d* où *rᵢ* représente la résistivité de la charge et d le diamètre de la surface de contact entre les grains. La surface de recouvrement des charges est contrôlée par leur géométrie ainsi que par leurs propriétés viscoélastiques, c'est à dire leur aptitude à se déformer sous contrainte.

La résistance tunnel est associée à tout film isolant pouvant recouvrir la surface des particules. Il peut s'agir de tensioactifs adsorbés ou plus simplement de la matrice organique qui enrobe les charges une fois qu'elles y sont dispersées. Dans cette configuration, le mécanisme de conduction entre grains conducteurs n'est plus ohmique, mais s'effectue par sauts électroniques entre particules isolées. En raison des faibles propriétés de transport électronique des polymères, le champ électrique local entre grains conducteurs, nécessaire pour parvenir à la circulation du courant électrique dans la totalité des amas conducteurs constitués par les charges, doit être très important. Pratiquement le champ électrique local n'est jamais suffisant pour permettre un saut électronique entre chaque particule connectée, mais isolée par un film de polymère. Seule une faible partie des chemins conducteurs est sollicitée et participe réellement à la circulation du courant. La conductivité macroscopique est fortement réduite. La résistance tunnel est définie par la relation *Rₜ* = *rₜ* / a où *rₜ* représente la résistivité tunnel, liée à l'épaisseur du film et aux propriétés électriques de la matrice organique isolante, et où a quantifie l'aire de contact.

La résistance à l'interface particule - particule est la somme des résistances de constriction et tunnel. Dans la grande majorité des cas, la résistance tunnel gouverne la conductivité macroscopique des milieux hétérogènes. En effet, la résistance tunnel passe de 10⁻⁸ à 10³ Ω.cm lorsque l'épaisseur du film isolant recouvrant les particules conductrices en contact, varie de 0.5 à 12 nm. Cette épaisseur d'isolation de quelques nanomètres correspond classiquement à la couche de matrice polymérique adsorbée à la surface des charges lors de la dispersion.

Les principes généraux exposés ci-dessus suggèrent que la réalisation de composites très conducteurs nécessite de mettre en oeuvre, par les techniques classiques de transformation des polymères, des matériaux très chargés en éléments conducteurs afin, d'une part, d'augmenter le nombre de contacts entre particules conductrices, et d'autre part, d'augmenter les surfaces de contact entre éléments adjacents.

Ces principes, repris dans le cadre du développement d'éléments pour pile à combustible, ont conduit à la rédaction des brevets suivants, les plus significatifs:

La demande de brevet EP 0 774 337 revendique un procédé de fabrication de corps moulés par extrusion de matières plastiques chargées à plus de 50 % vol (de préférence 65 à 90 %) en éléments conducteurs (graphite lamellaire ou pas, fibres conductrices,...). Ici, le mélange est réalisé dans un malaxeur, puis après avoir été broyé et concassé, le mélange est extrudé sous forme de plaques ou de tube. Le brevet décrit les opérations de mise en oeuvre et le fonctionnement spécifique et inventif de l'extrudeuse utilisée. Les formulations sont réalisées à partir de tout type de charges conductrices disponible dans le commerce.

Des demandes de brevets ont été déposées pour des procédés consistant à thermo-compresser des mélanges de poudre de graphite (lamellaire ou pas) dans des thermoplastiques. Les points principaux revendiqués sont la réalisation de matériaux suffisamment conducteurs, réalisables par moulage.

La demande WO-A-96/12 309 revendique la réalisation d'un empilement pour pile à combustible DMFC, à base d'un composite conducteur obtenu par mélange thermo-compressé de graphite lamellaire et de résine fluoré (PTFE). Les matériaux réalisés par ce procédé sont non poreux et directement moulables par compression. La structure du matériau conducteur et la nature des charges ne sont pas nécessairement optimisées pour maîtriser l'imperméabilité aux gaz ainsi que le refroidissement de la cellule (dépôt de matériau barrière en surface pour étanchéiser l'ensemble).

La demande EP 0 933 825 A2 décrit un procédé de fabrication de plaques séparatrices pour pile à combustible, à base d'un liant thermodurcissable (résine phénolique et époxyde) chargé en graphite (lamellaire ou pas). Le mélange est thermo-compressé dans un moule à la géométrie des plaques séparatrices à réaliser. La porosité, et donc en première approximation l'imperméabilité aux gaz, est optimisée en favorisant l'évacuation de l'eau et des gaz formés lors de la réticulation. Toutefois, une couche isolante de résine recouvre la surface des plaques et doit être éliminée par décapage.

La demande PCT WO 98/53514 décrit le procédé de fabrication par thermo-compression de plaques séparatrices bipolaires contenant de 50 à 95% de charge conductrice dans différents thermoplastiques. Le problème de l'imperméabilité aux gaz est contourné par l'ajout d'un agent hydrophile favorisant la migration d'eau dans les pores du matériau. Cette configuration favorise surtout l'évacuation de l'eau produite dans la pile, et permet le refroidissement de la cellule.

EP 0 935 303 A1 décrit un procédé de fabrication de plaques séparatrices pour piles à combustibles, de conductivité élevée, de faible perméabilité aux gaz et de propriétés mécaniques élevées. Le matériau de plaque bipolaire est constitué d'un compound à base de polymère et de poudre de graphite dont le rapport de forme est de 4 à 60 (préférentiellement 10 à 30). Cette morphologie de charge permet d'améliorer l'imperméabilité aux gaz et la conductivité électrique. Par contre la structure de la charge n'est pas décrite.

L'art antérieur, dans le domaine des matériaux chargés conducteurs électrique pour plaque bipolaire, a donc essentiellement décrit des matériaux à base de graphite dont la morphologie et la structure ne sont pas clairement explicitées.

D'autre part, dans le domaine des matériaux pour plaque bipolaire à base de polyvinylidène fluoride (PVDF) ou plus généralement de polymères fluorés, on recensera les demandes de brevets suivantes :

Le brevet DE 3538732 décrit une électrode faite d'une pâte pouvant être étendue et constituée de 70 à 80 % en masse de poudre de carbone de taille de granulés 30 à 300 µm et de 10 à 20 % en masse d'une solution de PVDF à 4 à 8% de PVDF dans le DMF (diméthylformamide) et d'au moins 5 % en masse de poudre de PTFE (plytetrafluoroéthylène)de taille de granulés de 10 à 100 µm. La pâte est étendue sur un substrat en aluminium puis séchée par une lampe infra rouge pendant ½ h à 4 h. Cette électrode à base de PVDF et de carbone est perméable aux gaz et aux liquides.

Dans la demande de brevet JP 08031231 A il est décrit une formulation à base de graphite sphérique, de thermodurcissable ou de thermoplastique et de noir de carbone de type ketjenblack conducteur. Le matériau présente une bonne résistance mécanique et peut être utilisé pour le moulage et le calandrage. Ce matériau est utilisable dans le domaine de la pile à combustible.

Dans la demande de brevet JP 04013287 A on décrit une plaque de carbone poreuse dans les trois dimensions à hauteur de 60 à 80 % de porosité.

Dans la demande de brevet JP 52122276 A on décrit une électrode préparée par dépôt sur un textile poreux de carbone anisotropique pyrolysé, lui-même recouvert d'une dispersion aqueuse de TEFLON® (PTFE) et le tout est séché pour former une couche poreuse hydrophobe.

Dans la demande de brevet WO 200025372 il est décrit une plaque bipolaire pour utilisation dans le domaine des piles à combustibles et provenant du moulage d'une résine vinyl ester et d'une poudre de graphite permettant d'obtenir une conductivité d'au moins 10 S/cm. Ces plaques peuvent contenir de 20 à 95% de graphite et de 0 à 5% de noir de carbone ainsi que des fibres de coton. On y décrit aussi l'utilisation de produits fluorés pour améliorer le démoulage ainsi que l'hydrophobie.

Dans le brevet US 5268239 on décrit la préparation d'une plaque séparatrice. Cette plaque à base de graphite est un mélange contenant de 25 à 75% en masse de graphite et de 25 à 75% en masse de résine phénolique. Cette plaque est ensuite pyrolysée entre 800 et 1000°C, puis graphitée entre 2300°C et 3000°C. Ce brevet décrit aussi l'application d'un film de fluoropolymère pour éviter la migration de l'électrolyte.

Dans la demande de brevet WO 200024075 on décrit la préparation d'un substrat, utilisable pour la préparation de membrane, ce substrat comprend une matrice de fibre poreuse, caractérisé par le fait que les fibres sont collées avec de la silice et un polymère fluoré. Il est décrit aussi le procédé, avec dans un premier temps la dispersion des fibres dans l'eau puis dans un deuxième temps le dépôt de cette dispersion pour former un réseau. Le réseau de fibres est alors séché et compacté. Une dispersion aqueuse de fluoropolymère pouvant être introduite avant ou après cette étape de séchage et compactage.

Dans le brevet FR 2355381 il est décrit un procédé de préparation d'une électrode pour piles à combustible caractérisé par les étapes suivantes: (i) tout d'abord la formation d'une suspension aqueuse de particules de catalyseur, avec addition d'un agent tensio-actif cationique, puis (ii) formation d'une deuxième suspension aqueuse colloïdale de polymère hydrophobe, (iii) mélange des deux suspensions pour former une suspension aqueuse uniforme de particules de catalyseur et de particules de polymère hydrophobe. Cette suspension est alors déposée sur un support conducteur et chauffée afin de fritter la couche de catalyseur et de polymère.

Dans le brevet FR 2430100 il est décrit un procédé de préparation d'une poudre sèche finement divisée caractérisée en ce qu'elle est constituée par des grains ayant une dimension maximum d'environ 5 µm. Cette poudre comprend du carbone précatalysé et un polymère fluorocarboné hydrophobe, par exemple le PTFE. Cette poudre est obtenue par floculation d'une co-suspension des grains de carbone précatalysé et des grains de polymères.

Dans le brevet EP 0948071 il est une méthode pour produire une électrode pour piles à combustible, ainsi qu'une poudre catalytique préparée en mélangeant une poudre fine de carbone supportant un métal catalytique avec une dispersion colloïdale d'un polymère. La suspension ainsi obtenue est séchée.

Dans le brevet EP 0557259 il est décrit la préparation d'une électrode de diffusion gazeuse pour cellule électrochimique. Cette électrode est préparée à l'aide d'une poudre de noir de carbone dispersée dans un solvant organique en présence de polyéthylène soluble. La dispersion est ensuite séchée ce qui permet au polyéthylène de recouvrir la surface du noir. Ce polyéthylène est ensuite fluoré. Cette poudre de noir de carbone hydrophobe est ensuite mélangée à un noir de carbone de type acétylénique supportant un métal catalyseur ainsi que du PTFE pour former des agrégats. Ces agrégats sont ensuite pressés à 20 kg/cm² et frittés à 340°C pendant 20 minutes.

Dans le brevet EP 0928036 il est décrit une méthode de préparation d'électrode perméable au gaz, en effectuant une dispersion de particules de noir de carbone ou de noir de carbone supportant un catalyseur en utilisant un équipement à haut cisaillement pour l'homogénéiser tel que les micro - fluidiseurs puis en ajoutant un liant à la dispersion obtenue puis un agent stabilisant. Ce mélange est ensuite déposé sur un tissu électro-conducteur puis séché et fritté à 300 - 400°C.

Dans la demande de brevet WO 200030202 il est décrit une composition moulable permettant la préparation de plaques collectrices de courant par compression moulage ou injection moulage. Cette composition comprend un liant polymère non fluoré; parmi les polymères utilisables on trouvera les polyphénylène sulfides , les polyphénylène éther modifiés, les polymères cristaux liquides, les polyamides, les polyimides, les polyesters, les phénoliques, les résines époxydes et les vinyl esters. Parmi les particules conductrices on trouvera plus particulièrement les particules carbonées. Ces particules carbonées sont présentes à hauteur d'au moins 45 % en masse.

Makoto Ushida dans J. Electrochem. Soc., vol.142, No. 12, December 1995 a étudié la préparation d'une MEA (membrane and electrode assembly), basée sur la formation d'un colloïde permettant d'optimiser la formation d'un réseau dans la couche de catalyseur et de simplifier la fabrication de la MEA. La préparation par la réalisation par exemple d'un mélange de perfluorosulfonate ionomer (PFSI) en solution dans de l'éthanol est additionnée d'acétate de butyle (un mauvais solvant) pour former une solution colloïdale. Puis un carbone supportant du platine est mélangé à un carbone recouvert de PTFE . Ce carbone recouvert de PTFE est réalisé en mélangeant une suspension de carbone et une suspension de PTFE ainsi qu'un surfactant, le surfactant est alors enlevé lors d'un traitement sous air à 290°C. Le mélange des deux poudres Pt/C et C/PTFE est additionné à la solution colloïdale du PFSI ce qui génère une réticulation des chaînes de PFSI adsorbées par le carbone favorisée par un traitement ultrasonique. Cette suspension colloïdale est ensuite étalée sur un papier carbone qui est pressé à 130°C à 7,5 MPa pendant 1 minute.

Fischer dans Journal of applied electrochemistry 28 (1998) pp 277-282 a étudié la préparation de MEA en pulvérisant le mélange d'un slurry (suspension) d'un métal catalyseur, d'une solution de Nafion® (acrylate fluoré) dans l'eau et de glycerol, sur une membrane à base de Nafion 117 ® chauffée. Les solvants sont ensuite évaporés par chauffage à 150°C.

Dans le brevet US 4214969 il est décrit une plaque bipolaire pour piles à combustibles constituée de graphite et de fluoropolymère dans un ratio 2.5 :1 à 16:1. Ces plaques bipolaires présentent une conductivité volumique 4.10⁻³ Ω.in. Ce mélange de graphite et de fluoropolymère est mélangé à sec dans un mélangeur pendant 25 minutes puis introduit dans un moule à chaud sous pression.

La demande de brevet GB 2220666 décrit une méthode de coatomisation pour la préparation de particules de noir de carbone revêtues de façon très homogène par des particules de latex synthétique. Il n'est cité aucun aucun polymère fluoré dans la description ni dans les exemples.

L'art antérieur a essentiellement décrit la réalisation de plaques bipolaires par des procédés discontinus utilisant des solvants ou des procédés ne faisant intervenir que des mélanges grossiers des différents produits utilisés dans la réalisation des plaques. L'art antérieur décrivant une coatomisation n'a pas décrit les polymères fluorés. Il n'a pas été décrit dans la littérature de graphite présentant une morphologie permettant de réaliser directement par moulage des plaques composites présentant un niveau d'imperméabilité élevé, une conductivité surfacique élevée et une conductivité thermique élevée.

La demanderesse a maintenant trouvé une poudre microcomposite très homogène à base d'un fluoropolymère et de plaquettes de graphite ayant une morphologie de lamelles de graphite superposées, parallèles et présentant une surface de contact interparticulaire importante. Cette poudre peut être mise en oeuvre par les techniques habituellement utilisées pour les thermoplastiques et permet d'obtenir des plaques bipolaires directement après moulage présentant une conductivité surfacique élevée. Les niveaux d'imperméabilité aux gaz sont fonctions des conditions de mise en oeuvre de la plaque. Cette poudre microcomposite peut être produite par coatomisation d'une dispersion aqueuse comprenant un fluoropolymère et ces plaquettes de graphite.

Le procédé de fabrication de la poudre microcomposite ne fait intervenir aucun solvant autre que l'eau. Les objets ainsi fabriqués sont utiles dans les piles à combustible.

Les avantages et autres caractéristiques de la présente invention sont exposés dans la description détaillée de l'invention qui suit.

### [Brève description de l'invention]

La présente invention concerne une poudre microcomposite comprenant:
- des plaquettes G_{LP} de graphite de 50 à 1000 µm de coté et de 5 à 50 µm d'épaisseur constituées d'agglomérats de particules de graphite plus élémentaires accolées et superposées de façon à ce que leurs plans principaux soient parallèles entre eux,
- ces plaquettes étant recouvertes de particules de 0,1 à 0,5 µm d'un fluoropolymère.

La présente invention concerne aussi les objets constitués de cette poudre. On peut fabriquer ces objets par extrusion de la poudre ou son injection dans une presse à injecter. Ces objets peuvent être des plaques bipolaires de piles à combustible, des éléments de supercapacités et des surfaces d'échange dans des échangeurs de chaleur.

Les plaques bipolaires ainsi obtenues présentent une conductivité surfacique élevée. Cette poudre permet la réalisation de plaques très imperméables ou poreuses selon les conditions de mise en oeuvre.

### [Description détaillée de l'invention]

**S'agissant des plaquettes de graphite (G_{LP})** de dimension de 50 à 1000 µm de coté il est clair que c'est la largeur et la longueur des plaquettes qui sont comprises entre 50 et 1000 µm. Avantageusement elles sont de dimension entre 50 et 500 µm et de préférence entre 100 et 500 µm de coté. La structure particulière de ces plaquettes permet d'optimiser la propriété de conductivité des plaques bipolaires composites du fait de l'augmentation de la surface de contact entre particules graphitiques. Ces plaquettes sont constituées de plaquettes élémentaires de graphite expansé de 5 à 20µm de coté et d'épaisseur 0,1 à 5 µm. Ces plaquettes (G_{LP}) peuvent être fabriquées par les procédés suivants :
1) Agglomération de plaquettes de graphite en phase solvant :
   Des plaquettes de graphite exfoliés sont dispersées dans un solvant organique. Le taux de graphite dans le solvant est compris entre 10 et 50% en volume suivant les caractéristiques dimensionnelles du graphite (faible taux de dilution pour les graphites de grande surface spécifique, à fort taux pour les plaquettes de quelques m²/g de surface spécifique) afin d'obtenir une pâte de faible viscosité. Ce mélange est agité jusqu'à obtention d'une dispersion homogène. La pâte est ensuite séchée par filtration du solvant puis par dégazage dans une enceinte sous vide. Ces opérations peuvent avantageusement permettre de récupérer le solvant. La pâte sèche obtenue est constituée de gros agglomérats de plaquettes de graphite, les plaquettes étant en majorité superposées. Dans un agglomérat, les plaquettes sont superposées, accolées, et leurs plans principaux sont en majorité parallèles. Cette pâte est ensuite concassée et tamisée afin d'obtenir une poudre de graphite (G_{LP}) de granulométrie comprise entre 50µm et 1 mm.
2) Broyage de pièces de graphite :
   L'idée est ici d'obtenir un graphite du type (G_{LP}), en broyant des matériaux graphitiques solides. Le broyage s'effectue en phase solide ou liquide. La poudre obtenue est tamisée à la granulométrie spécifiée pour le graphite (G_{LP}). Préférentiellement on utilisera comme matière première, des pièces graphite réalisées par compression afin de disposer d'une structure de départ anisotrope.
3) Broyage de feuilles de graphite :
   Pour obtenir des plaquettes du type (G_{LP}), on peut aussi partir de feuilles de graphite réalisées par calandrage et / ou laminage de graphite naturel ou de graphite expansé. Préférentiellement on partira de particules de graphite anisotropes, idéalement des plaquettes. Dans les feuilles calandrées, les plaquettes sont accolées et superposées parallèlement à la surface de la feuille de graphite, par le procédé mécanique de laminage.
   Les feuilles de graphite sont ensuite découpées et broyées soit en phase solide, soit en phase solvant. La poudre obtenue est concassée et tamisée aux dimensions spécifiées pour le graphite (G_{LP}).

La poudre microcomposite de l'invention peut comprendre aussi un graphite naturel ou synthétique (G1) de forme lamellaire ayant une taille de particules de 10 µm à 600 µm, ce graphite (G1) étant recouvert de particules de 0,1 à 0,5 µm d'un fluoropolymère. Avantageusement la taille des particules de (G1) est comprise entre 10 et 150µm.

On ne sortirait pas du cadre de l'invention si la poudre contenait au moins un autre élément électroconducteur recouvert de particules de 0,1 à 0,5 µm d'un fluoropolymère en plus des plaquettes de graphite (G_{LP}) ou en plus des plaquettes de graphite (G_{LP}) et du graphite (G1).

S'agissant de cet autre élément électroconducteur ce sont tous les conducteurs de l'électricité. On peut citer à titre d'exemple les métaux, les oxydes métalliques et les produits à base de carbone. A titre d'exemple de produits à base de carbone on peut citer le graphite (différent des plaquettes (G_{LP}) et de (G1), les agrégats de noir de carbone, les fibres de carbone et les charbons actifs. Des produits à base de carbone pouvant être utilisés sont décrits dans Handbook of fillers 2nd Edition published by Chem Tec Publishing 1999 page 62 § 2.1.22, page 92 § 2.1.33 et page 184 § 2.2.2.

**S'agissant du fluoropolymère** on désigne ainsi tout polymère ayant dans sa chaîne au moins un monomère choisi parmi les composés contenant un groupe vinyle capable de s'ouvrir pour se polymériser et qui contient, directement attaché à ce groupe vinyle, au moins un atome de fluor, un groupe fluoroalkyle ou un groupe fluoroalkoxy.

A titre d'exemple de monomère on peut citer le fluorure de vinyle; le fluorure de vinylidène (VF2); le trifluoroethylene (VF3); le chlorotrifluoroethylene (CTFE); le 1,2-difluoroethylene; le tetrafluoroethylene (TFE); l'hexafluoropropylene (HFP); les perfluoro(alkyl vinyl) ethers tels que le perfluoro(methyl vinyl)ether (PMVE), le perfluoro(ethyl vinyl) ether (PEVE) et le perfluoro(propyl vinyl) ether (PPVE); le perfluoro(1,3 -dioxole); le perfluoro(2,2-dimethyl- 1,3 -dioxole) (PDD); le produit de formule CF2=CFOCF2CF(CF3)OCF2CF2X dans laquelle X est SO2F, CO2H, CH2OH, CH2OCN ou CH20PO3H; le produit de formule CF2=CFOCF2CF2SO2F; le produit de formule F(CF2)nCH20CF=CF2 dans laquelle n est 1, 2, 3, 4 or 5; le produit de formule R1CH2OCF=CF2 dans laquelle R1 est l'hydrogene ou F(CF2)z et z vaut 1, 2, 3 ou 4; le produit de formule R3OCF=CH2 dans laquelle R3 est F(CF2)z- et z est 1, 2, 3 or 4; le perfluorobutyl ethylene (PFBE); le 3,3,3-trifluoropropene et le 2-trifluoromethyl-3 ,3 ,3 -trifluoro- 1-propene.

Le fluoropolymère peut comprendre un homopolymère ou un copolymère, il peut aussi comprendre des monomères non fluorés tels que l'éthylène. Avantageusement le fluoropolymère est du PVDF homopolymère ou copolymère contenant au moins 60% en poids de VF2, le comonomère éventuel est choisi parmi les monomères fluorés cités plus haut et est avantageusement le HFP. Le fluoropolymère peut contenir des plastifiants ou des additifs, comme par exemple un plastifiant bien connu le dibutyle sébaçate.

La poudre microcomposite peut comprendre, en poids, 10 à 40% de fluoropolymère pour respectivement 90 à 60% de plaquettes (G_{LP}) et éventuellement de graphite (G1) et d'un autre produit électroconducteur. De façon avantageuse la poudre comprend 15 à 30% de fluoropolymère pour respectivement 85 à 70% de plaquettes (G_{LP}) et éventuellement de graphite (G1) et d'un autre produit électroconducteur. Dans les proportions précédentes il s'agit du fluoropolymère contenant éventuellement des plastifiants ou des additifs.

La poudre microcomposite peut contenir aussi jusqu'à 5 parties en poids d'un agent porogène pour 100 parties de l'ensemble constitué du fluoropolymère, des plaquettes (G_{LP}) et éventuellement du graphite (G1) et d'un autre électroconducteur. A titre d'exemple d'agent porogène on peut citer le carbonate de calcium, l'azobiscarbonamide.

La poudre microcomposite se présente sous forme de plaquettes de graphite (G_{LP}) recouvertes avantageusement de façon uniforme par des particules de fluoropolymère. Elle comprend éventuellement des particules de graphite (G1) ou des particules d'un autre électroconducteur ou des particules de graphite (G1) et des particules d'un autre électroconducteur, toutes ces particules étant recouvertes de façon uniforme par des particules de fluoropolymère. Les particules de fluoropolymère peuvent recouvrir en partie ou en totalité les plaquettes (G_{LP}), le graphite (G1) et les particules de produit électroconducteur.

La poudre microcomposite peut être fabriquée par (co)atomisation d'une ou plusieurs émulsions ou dispersions aqueuses contenant ses différents constituants. Par exemple la poudre microcomposite de l'invention peut être fabriquée par coatomisation entre un latex de fluoropolymère (une émulsion ou une suspension) et une dispersion aqueuse des plaquettes (G_{LP}) et éventuellement de (G1) et d'un autre électroconducteur. Le latex et la dispersion sont introduits dans la tête de coatomisation selon les techniques habituelles. On peut aussi avant coatomisation faire un mélange par introduction directe des plaquettes (G_{LP}) et éventuellement de (G1) et d'un autre électroconducteur dans le latex de fluoropolymère soit encore mélanger une dispersion des plaquettes (G_{LP}) et éventuellement de (G1) et d'un autre électroconducteur et du latex de fluoropolymère, il s'agit de pulvériser une dispersion aqueuse (ou une suspension) dans un courant d'air chaud pour éliminer l'eau et récupérer les produits dispersés ou en suspension.

**S'agissant des objets constitués de cette poudre** il suffit d'extruder cette poudre à 230°C sur extrudeuse bi-vis co ou contra rotative présentant un profile de vis peu cisaillant, ou de l'injecter à 240°C dans une presse à injecter avec une vis présentant un profile de type PVC.

Les plaques bipolaires obtenues à l'aide de la poudre microcomposite précédente peuvent présenter une masse volumique allant de 500 à 3000 kg/m³, une résistivité comprise entre 0.01 et 1 Ω.cm en résistivité volumique dans l'épaisseur du matériau, et de 0.005 à 0.5 Ω.cm en résistivité mesurée par la technique des quatre pointes à la surface des matériaux. Le module de flexion des plaques bipolaires peut être compris entre 1000 et 12000 MPa et la contrainte en flexion à la rupture est comprise entre 1 et 50 MPa et avantageusement entre 30 et 50 MPa. La conductivité thermique transversale désigne la conductivité thermique mesurée à travers l'épaisseur du matériau ; elle peut être comprise entre 2 et 50 W/m/K en fonction du taux de graphite et du degré d'anisotropie. La conductivité thermique longitudinale désigne la conductivité thermique mesurée parallèlement à la surface du matériau ; elle peut être comprise entre 10 et 200 W/m/K. Ces caractéristiques sont obtenues en ajustant les proportions et la nature des constituants.

### EXEMPLES :

Dans les exemples suivants on désigne par (G_{LP}) des plaquettes de graphite de caractéristiques dimensionnelles 100 à 1000µm avec des particules en moyenne de 300µm de coté et par (G1) un graphite de caractéristiques dimensionnelles de 10 à 80µm de coté avec une moyenne de 30 µm.

### Exempte 1 : (selon l'invention) plaque dense

On part d'un latex de KYNAR® 710 de la société ATOFINA présentant un extrait sec à 25%, et d'une dispersion de graphite G_{LP} + G1 préparée selon le mode opératoire suivant :
Les produits suivants entrent en oeuvre :
   Le KYNAR®710 est un PVDF homopolymère de MVFR (Melt Volume Flow Rate) 10 cm³ / 10 min à 230°C sous 5 kg.
   Un latex de Kynar 710 (Extrait sec = 20%), un élément carboné, le mélange de Graphites G1+G_{LP}, un antimousse (Byk 019), un surfactant (Coadis 123K).
   Une dispersion de graphites G1 + G_{LP} est préparée en mélangeant l'eau, le surfactant, l'anti-mousse puis après dissolution, on ajoute la charge sous forte agitation en visant un extrait sec élevé (50%). On ajoute sous agitation modérée le latex puis on complète avec de l'eau pour obtenir une dispersion liquide facilement pompable (ES (Extrait Sec) à 20%). La composition d'une dispersion de graphite est donnée ci-après : 973 g d'eau, 0.5 g d'antimousse, 129.8 g de surfactant (agitation modérée) puis rajouter 1040g de Graphite. Agiter fortement jusqu'à obtenir une solution liquide qui ne décante pas. Ajouter sous agitation modérée 1040g de Latex de PVDF KYNAR® 710 et 3475.1 g d'eau.
   Le mélange dispersion de graphites / latex de PVDF ainsi préparé est ensuite pompé sous agitation modérée puis coatomisé en utilisant les conditions opératoires suivantes :
   Température d'entrée du coatomiseur : 170°C
   Température de sortie du coatomiseur : 60°C
   Débit total : 17 kg/h

La coatomisation sur MINOR PRODUCTION® de la société NIRO® des particules de latex de PVDF et des particules de graphite permet la préparation de 1000 g de poudre micro - composite de composition 80% massique de graphite G1+G_{LP} et 20 % massique de Kynar® 710. Cette poudre est pressée à 1T/cm² à 185°C pour préparer une plaque de densité 2050 kg/cm³.

### Exemple 2 : (selon l'invention) plaque dense

On part d'un latex de KYNAR® 710 de la société ATOFINA présentant un extrait sec à 25% et d'une dispersion de graphites G_{LP} +G1 préparée selon le mode opératoire suivant :
Les produits suivants entrent en oeuvre :
   Le KYNAR®710 est un PVDF homopolymère de MVFR (Melt Volume Flow Rate) 10 cm³/ 10 min à 230°C sous 5 kg.
   Un latex de Kynar 710 (Extrait sec = 20%), un élément carboné, le mélange de Graphites G1+G_{LP}, un antimousse (Byk 019), un surfactant (Coadis 123K).
   Une dispersion de graphites G1 + G_{LP} est préparée en mélangeant l'eau, le surfactant, l'anti-mousse puis après dissolution, on ajoute la charge sous forte agitation en visant un extrait sec élevé (50%). On ajoute sous agitation modérée le latex puis on complète avec de l'eau pour obtenir une dispersion liquide facilement pompable (ES à 20%). La composition d'une dispersion de graphites est donnée ci-après : 973 g d'eau, 0.5 g d'antimousse, 129.8 g de surfactant (agitation modérée) puis rajouter 1040 g de Graphites. Agiter fortement jusqu'à obtenir une solution liquide qui ne décante pas. Ajouter sous agitation modérée 780 g de Latex de PVDF KYNAR® 710 et 3475.1 g d'eau.
   Le mélange dispersion de graphites / latex de PVDF ainsi préparé est ensuite pompé sous agitation modérée puis coatomisé en utilisant les conditions opératoires suivantes :
   Température d'entrée du coatomiseur : 170°C
   Température de sortie du coatomiseur : 60°C
   Débit total : 17 kg/h

La coatomisation sur MINOR PRODUCTION® de la société NIRO® des particules de latex de PVDF et des particules de graphites permet la préparation de 1000 gr de poudre micro - composite de composition 87% massique de graphites G1 +G_{LP} et 13 % massique de Kynar® 710. Cette poudre est pressée à 1T/cm² à 185°C pour préparer une plaque de densité 2050 kg/cm³.

### Exemple 3: (comparatif) plaque dense

On reprend la procédure de préparation de l'exemple 1 en remplaçant le mélange de graphites G1+G_{LP} par le graphite G1.

### Exemple 4 : (comparatif) plaque dense

Un mélange de graphites G1+G_{LP} est formulé avec une poudre de PVDF Kynar® 711 (Kynar® 710 sous forme de poudre de taille comprise entre 10 et 50 µm). Ce mélange est réalisé dans un mélangeur à poudre de type Turbula. Ce procédé de mélange est appelé "dry blend" dans la suite du texte. La poudre récupérée présente une composition de 80% en masse de graphites G1+G_{LP} et 20 % en masse de PVDF. Cette poudre est pressée à 1T/cm² à 185°C pour préparer une plaque de densité 2050 kg/cm³.

### Exemple 5 : (comparatif) plaque dense

Un mélange de graphites G1+G_{LP} est formulé avec une poudre de PVDF Kynar® 711 (Kynar® 710 sous forme de poudre de taille comprise entre 10 et 50 µm). Ce mélange est réalisé dans un mélangeur à poudre de type Turbula. La poudre récupérée présente une composition de 87% en masse de graphites G1+G_{LP} et 13 % en masse de PVDF. Cette poudre est pressée à 1T/cm² à 185°C pour préparer une plaque de densité 2050 kg/cm³.

Les résultats sont reportés sur le tableau 1.

**Tableau 1**

| Références des matériaux | Procédé de formulation | Conductivit é 4 pointes sur plaque | Aspect de surface des plaques *** | Perméation des plaques à l'He [m³m/m²/Pa/s]x7.5 .10⁻¹⁸ | Processabilité En extrudeuse Bi-vis co rotative* | Contrainte à la rupture en flexion | Conductivité thermique transversale et longitudinale | Caractérisation Rhéologique en viscosimètre capillaire** |
|---|---|---|---|---|---|---|---|---|
| 80/20 (G1+G_{LP}) Exemple 4 | Dry blend 80%m G1+G_{LP} 20%m Kynar® 711 | 50 S/cm | Hétérogène | 12 barrer | Limite d'extrudabilité :- couple non constant -Jonc d'aspect hétérogène | | | |
| 87/13 (G1+G_{LP}) Exemple 5 | Dry blend - 87%m G1+G_{LP} -13%m Kynar® 711 | 110 S/cm | Hétérogène | | Impossible à extruder | | trans: 56 W/m.K long : 8 W/m.K | |
| Microcomposite 80/20 (G1+ G_{LP}) Exemple 1 | Microcomposite - 80%m G1+G_{LP} - 20%m Kynar ® 710 | 50 S/cm | Homogène | 5 barrer | Extrudable, couple de 50 N.m, jonc régulier. | 34.9 MPa | | 1500 N |
| Microcomposite 87/13 (G1+ G_{LP}) Exemple 2 | Microcomposite - 87%m G1+G_{LP} -13%m Kynar ® 710 | 130S/cm | Homogène | - | Extrudable, couple de 110 N.m, jonc.. | 31 MPa | trans: 100 W/m.K long : 12 W/m.K | |
| Microcomposite 80/20 G1 Exemple 3 | Microcomposite - 80%m G1 - 20%m Kynar ® 710 | 30 S/cm | Homogène | 1000 barrer | Extrudable, couple de 50 N.m, jonc régulier | 29.7 MPa | | 2500 N |

| | | | | | | | | |
|---|---|---|---|---|---|---|---|---|
| *: référence extrudeuse : Rheodrive 5000, bi-vis co-rotative LID=9.4 à 15. ** : Force nécessaire à faire s'écouler la matière dans une filière de 4 mm à cisaillement constant 0,1 s⁻¹ à 230°C. *** : Aspect de surface macroscopique des plaques. | | | | | | | | |

### Comparaison Exemples 3 et 1 :

Le passage du graphite G1 au graphite G1 +G_{LP} permet d'obtenir une augmentation de la conductivité surfacique.

### Comparaison Exemples 3, 2 et 1 :

Le passage du graphite G1 au graphite G1 + G_{LP} permet d'obtenir une augmentation de la contrainte de rupture en flexion.

### Comparaison Exemples 2 et 5 :

L'utilisation de la poudre microcomposite coatomisée par rapport au dry blend permet d'obtenir une augmentation de la conductivité transversale et longitudinale.

### Comparaison Exemples 2 et 5 :

L'utilisation de la poudre microcomposite coatomisée par rapport au dry blend permet d'obtenir une augmentation de la conductivité surfacique.

### Comparaison Exemples 1, 2, 3 et 5 :

L'utilisation du graphite G1+ G_{LP} sous forme de poudre microcomposite permet d'obtenir un effet de synergie en terme de conductivité surfacique.

### Comparaison Exemples 1 et 3 :

Le passage du graphite G1 au graphite G1 + G_{LP} permet d'obtenir une diminution de la perméabilité à l'hélium.

### Comparaison Exemples 1, 2, 3, 4, 5 :

L'utilisation d'une poudre microcomposite facilite l'extrusion de matériaux très chargés.

### Comparaison Exemples 1 et 3 :

L'utilisation du graphite G1+ G_{LP} facilite l'écoulement de la matière fondue au bas gradient de cisaillement.

## Revendications

1. Poudre microcomposite comprenant :
• des plaquettes (G_{LP}) de graphite de 50 à 1000 µm de coté et de 5 à 50 µm d'épaisseur constituées d'agglomérats de particules de graphite plus élémentaires accolées et superposées de façon à ce que leurs plans principaux soient parallèles entre eux,
• ces plaquettes étant recouvertes de particules de 0,1 à 0,5 µm d'un fluoropolymère.

2. Poudre selon la revendication 1 comprenant aussi un graphite naturel ou synthétique (G1) de forme lamellaire ayant une taille de particules de 10 µm à 600 µm, ce graphite (G1) étant recouvert de particules de 0,1 à 0,5 µm d'un fluoropolymère.

3. Poudre selon la revendication 2 dans laquelle la taille des particules de (G1) est comprise entre 10 et 150µm.

4. Poudre selon l'une quelconque des revendications précédentes comprenant au moins un autre élément électroconducteur recouvert de particules de 0,1 à 0,5 µm d'un fluoropolymère.

5. Poudre selon l'une quelconque des revendications précédentes dans laquelle le fluoropolymère est un PVDF (polyvinylidène fluoride) homopolymère ou copolymère contenant au moins 60% en poids de VF2.

6. Poudre selon les revendications précédentes dans laquelle les plaquettes de graphite (G_{LP}) sont constituées de plaquettes élémentaires de graphite expansé de 5 à 20 µm de côté et de 0,1 à 5 µm d'épaisseur.

7. Poudre selon l'une quelconque des revendications précédentes dans laquelle les proportions sont, en poids, de 10 à 40% de fluoropolymère pour respectivement 90 à 60% de plaquettes (G_{LP}) et éventuellement de graphite (G1) et d'un autre produit électroconducteur.

8. Poudre selon la revendication 7 dans laquelle la poudre comprend 15 à 30% de fluoropolymère pour respectivement 85 à 70% de plaquettes (G_{LP}) et éventuellement de graphite (G1) et d'un autre produit électroconducteur.

9. Poudre selon l'une quelconque des revendications précédentes contenant aussi jusqu'à 5 parties en poids d'un agent porogène pour 100 parties de l'ensemble constitué du fluoropolymère et des plaquettes (G_{LP}) et éventuellement du graphite (G1) et d'un autre électroconducteur.

10. Objets obtenus par extrusion ou injection de la poudre de l'une quelconque des revendications précédentes.

11. Objets selon la revendication 10 qui sont des plaques bipolaires de piles à combustible, des éléments de supercapacité ou des surfaces d'échange dans des échangeurs de chaleur.

12. Procédé de préparation de la poudre de l'une quelconque des revendications 1 à 11 par (co)atomisation d'une ou plusieurs émulsions ou dispersions aqueuses contenant ses différents constituants.

## Claims

1. Microcomposite powder comprising:
• graphite flakes (G_{LP}) having sides from 50 to 1000 µm and a thickness from 5 to 50 µm, consisting of agglomerates of more elementary graphite particles joined together and superimposed so that their principal planes are mutually parallel;
• these flakes being covered with particles of a fluoropolymer from 0.1 to 0.5 µm in size.

2. Powder according to Claim 1, also comprising a natural or synthetic graphite (G1) of lamellar shape having a particle size of 10 µm to 600 µm, this graphite (G1) being covered with particles of a fluoropolymer from 0.1 to 0.5 µm in size.

3. Powder according to Claim 2, in which the size of the (G1) particles is between 10 and 150 µm.

4. Powder according to any one of the preceding claims, comprising at least one other electrically conductive element covered with particles of a fluoropolymer from 0.1 to 0.5 µm in size.

5. Powder according to any one of the preceding claims, in which the fluoropolymer is a PVDF (polyvinylidene fluoride) homopolymer or copolymer containing at least 60 wt% VF2.

6. Powder according to the preceding claims, in which the graphite flakes (G_{LP}) consist of elementary expanded graphite flakes having sides from 5 to 20 µm and a thickness from 0.1 to 5 µm.

7. Powder according to any one of the preceding claims, in which the proportions are, by weight, from 10 to 40% of fluoropolymer per 90 to 60%, respectively, of flakes (G_{LP}) and, optionally, of graphite (G1) and of another electrically conductive product.

8. Powder according to Claim 7, in which the powder comprises 15 to 30% of fluoropolymer per 85 to 70%, respectively, of flakes (G_{LP}) and, optionally, of graphite (G1) and of another electrically conductive product.

9. Powder according to any one of the preceding claims, also containing up to five parts by weight of a pore-forming agent per 100 parts of the assembly consisting of the fluoropolymer, the flakes (G_{LP}) and, optionally, the graphite (G1) and another electrical conductor.

10. Objects obtained by extruding or injection moulding the powder of any one of the preceding claims.

11. Objects according to Claim 10 which are bipolar plates for fuel cells, supercapacitor elements or exchange surfaces in heat exchangers.

12. Process for preparing the powder of any one of Claims 1 to 11 by (co)atomization of one or more aqueous emulsions or dispersions containing its various constituents.

## Patentansprüche

1. Mikroverbundpulver umfassend:
• Graphitschuppen (G_{LP}) mit einer Seitenlänge von 50 bis 1000 µm und einer Dicke von 5 bis 50 µm, die aus Agglomeraten so miteinander verbundener und übereinander liegender, kleinerer Graphitteilchen bestehen, dass ihre Hauptebenen zueinander parallel sind,
• wobei diese Plättchen mit 0,1 bis 0,5 µm großen Teilchen eines Fluorpolymers überzogen sind.

2. Pulver gemäß Anspruch 1, das weiter einen natürlichen oder synthetischen (G1) Graphit in Lamellenform mit einer Teilchengröße von 10 µm bis 600 µm umfasst, wobei dieser Graphit (G1) mit 0,1 bis 0,5 µm großen Teilchen eines Fluorpolymers überzogen ist.

3. Pulver gemäß Anspruch 2, bei dem die Teilchengröße von (G 1) zwischen 10 und 150 µm liegt.

4. Pulver gemäß einem der vorangehenden Ansprüche, das wenigstens ein weiteres, mit 0,1 bis 0,5 µm großen Teilchen eines Fluorpolymers überzogenes, elektrisch leitendes Element umfasst.

5. Pulver gemäß einem der vorangehenden Ansprüche, bei dem das Fluorpolymer ein mindestens 60 Gew.-% VF2 enthaltendes Homopolymer oder Copolymer von PVDF (Polyvinylidenfluorid) ist.

6. Pulver gemäß einem der vorangehenden Ansprüche, bei dem die Graphitschuppen (G_{LP}) aus kleinen Plättchen von expandiertem Graphit mit 5 bis 20 µm Seitenlänge und 0,1 bis 5 µm Dicke bestehen.

7. Pulver gemäß einem der vorangehenden Ansprüche, bei dem die Gewichtsanteile 10 bis 40 % Fluorpolymer zu 90 bis 60 % Plättchen (G_{LP}) und gegebenenfalls Graphit (G1) und einem weiteren, elektrisch leitenden Produkt sind.

8. Pulver gemäß Anspruch 7, wobei das Pulver 15 bis 30 % Fluorpolymer auf 85 bis 70 % Plättchen (G_{LP}) und gegebenenfalls Graphit (G1) und ein weiteres, elektrisch leitendes Material umfasst.

9. Pulver gemäß einem der vorangehenden Ansprüche, das weiter bis zu 5 Gewichtsteile eines porenbildenden Mittels auf 100 Teile des aus Fluorpolymer und Plättchen (G_{LP}) und gegebenenfalls Graphit (G1) und einem weiteren elektrischen Leiter bestehenden Ganzen enthält.

10. Gegenstände, erhalten durch Extrusion oder Injektion des Pulvers eines der vorangehenden Ansprüche.

11. Gegenstände gemäß Anspruch 10, die bipolare Platten für Brennstäbe, Superkapazitätselemente oder Austauschoberflächen in Wärmetauschern sind.

12. Verfahren zur Herstellung des Pulvers eines der Ansprüche 1 bis 11 durch (Co)Zerstäubung einer oder mehrerer, diese verschiedenen Bestandteile enthaltender Emulsionen oder Dispersionen.
